# EUROPÄISCHE PATENTSCHRIFT

(11) **EP 0 566 821 B1**
(45) Veröffentlichungstag und Bekanntmachung des Hinweises auf die Patenterteilung: **03.01.1996**
(21) Anmeldenummer: 93100431.1
(22) Anmeldetag: 14.01.1993
(51) Int. Cl.: A01B 3/30, A01B 3/46, A01B 15/14

(54) **Aufsattel- oder Anhänge-Drehpflug**
Semi-mounted or trailed reversible plough
Charrue réversible semi-portée ou traînée

(30) Priorität: 22.04.1992 DE 9205455 U
(43) Veröffentlichungstag der Anmeldung: 27.10.1993
(73) Patentinhaber: Rabewerk GmbH + Co., D-49152 Bad Essen (DE)
(72) Erfinder: Albers, Heinrich, Dipl.-Ing., W-4515 Bad Essen (DE); Becker, Ignaz, Dipl.-Ing., W-4994 Pr. Oldendorf (DE)
(74) Vertreter: Missling, Arne, Dipl.-Ing.

(56) Entgegenhaltungen:
- EP-A- 0 297 969
- EP-A- 0 318 391
- DE-B- 2 756 548
- DE-U- 7 202 127
- DE-U- 9 202 278
- DE-U- 9 205 455
- DE-U- 9 210 659
- FR-A- 2 201 022
- FR-A- 2 322 518
- FR-A- 2 623 686
- FR-A- 2 658 694
- US-A- 3 830 312

## Beschreibung

Die Erfindung bezieht sich auf einen Aufsattel- oder Anhänge-Drehpflug mit einem vorderen und einem hinteren, durch ein horizontales Gelenk verbundenen Pflugrahmen, wobei der hintere Endbereich des vorderen Pflugrahmens um eine horizontale, im wesentlichen in Fahrtrichtung angeordnete erste Achse schwenkbar an der Abstützvorrichtung gelagert ist. Solch ein Pflug ist aus der EP-A-0318391 bekannt.

Im speziellen betrifft die Erfindung lange Aufsattel- bzw. Anhänge-Drehpflüge, welche einen Karren oder ein Hinterrad aufweisen, welches von einem Stabilisator gehalten und etwa bei zwei Drittel der Pfluglänge angeordnet ist. Um eine Bodenanpassung eines langen Pfluges zu ermöglichen und um Änderungen der Arbeitstiefe des letzten Pflugkörpers zu vermeiden, ist es, beispielsweise aus der EP-B1-297 969 bekannt, im Bereich der Abstützung des Pfluges durch das Hinterrad ein Gelenk einzuführen und am hinteren Pflugende ein Tiefen-Führungsrad anzubringen. Der vordere Pflugteil wird somit an seinem vorderen Ende vom Schlepper und an seinem hinteren Ende von dem Hinterrad geführt, während der hintere Pflugteil an seinem vorderen Ende von dem Hinterrad und an seinem hinteren Ende von dem Tiefen-Führungsrad abgestützt ist. Es somit möglich, die letzte Furche, welche gleichzeitig die Führung für die Schlepperräder während des nächsten Bearbeitungsganges bildet, mit einer konstanteren Tiefe auszubilden. Ähnliche Lösungen sind aus DE-OS 22 48 186, aus dem deutschen Gebrauchsmuster 72 02 127 und der FR-A-2 201 022 bekannt. Diese Lösungen betreffen Beetpflüge.

Das Problem besteht hinsichtlich der Anordnung und Ausgestaltung des Gelenkes insbesondere darin, daß bei den Beetpflügen das Gelenk eine gewisse Höhe aufweisen muß, um zu verhindern, daß unter dem Gelenk Verstopfungen durch Strohknäuel oder ähnliches vorkommen. Wenn jedoch das Gelenk zu hoch ist, ergibt sich für die an den Pflugkörpern angreifenden Kräfte bzw. deren Resultierende ein großer Hebelarm, welcher zum Anheben des hinteren Bereiches des Pfluges führt. Man hat deshalb versucht, durch Federn ein Gegenmoment aufzubringen, siehe DE-OS 22 48 186 und DE-Gbm 72 02 127. Bei der Lösung gemäß der EP-B1-297 969 sowie bei dem aus der EP-A1-318 391 bekannten Pflug ergibt sich jedoch in der normalen Lage des vorderen und hinteren Pflugrahmens kein ausreichendes Moment, so daß bei schweren Böden der hintere Pflugrahmen angehoben werden wird. Aus der EP-B1-297 969 ist es bekannt, das Gelenk zu verriegeln, wenn der Pflug im Vorgewende fährt. Während des Pflügens ist eine derartige Verriegelung jedoch nicht möglich, da dann die Wirkung des Gelenkes aufgehoben wurde. Bei dem aus der EP-A1-318 391 bekannten Pflug können die federnden Elemente nur dann wirksam werden, wenn der hintere Pflugrahmen bereits aus der fluchtenden, das heißt der normalen Lage heraus bewegt ist. Dies bedeutet, daß in der normalen Mittellage, in welcher eine Vorspannung aufgebracht werden müßte, Kraftfreiheit herrscht.

Der Erfindung liegt die Aufgabe zugrunde, einen Drehpflug der eingangs genannten Art zu schaffen, welcher bei einfachem Aufbau und einfacher, betriebssicherer Anwendbarkeit auch bei unebenem Boden eine konstante Tiefen-Führung des hinteren Pflugrahmens gewährleistet.

Erfindungsgemäß wird die Aufgabe dadurch gelöst, daß der vordere Endbereich des hinteren Pflugrahmens um eine zweite, zu der ersten Achse im wesentlichen fluchtende Achse schwenkbar an zumindest einem Hebelelement gelagert ist, welches um eine Querachse schwenkbar an der Abstützvorrichtung angeordnet ist, wobei der vordere und der hintere Pflugrahmen miteinander drehbar koppelbar sind.

Der erfindungsgemäße Drehpflug zeichnet sich durch eine Reihe erheblicher Vorteile aus. Erfindungsgemäß ist es möglich, den hinteren Pflugrahmen so an dem vorderen Pflugrahmen anzulenken, daß stets eine ausreichende Kraft zur Belastung des hinteren Pflugrahmens zur Verfügung steht. Es wird dadurch vermieden, daß der hintere Pflugrahmen bei Bodenunebenheiten in ungewollter Weise angehoben wird. Hieraus folgt, daß mit Hilfe des erfindungsgemäßen Drehpfluges insbesondere die letzte Furche des Pfluges stets mit konstanter Tiefe ausgebildet werden kann. Ein weiterer, wesentlicher Vorteil ist dadurch gegeben, daß eine Drehung des Pfluges erfolgen kann, ohne daß das horizontale Gelenk, um welches der hintere Pflugrahmen relativ zu dem vorderen Pflugrahmen verschwenkbar ist, in seiner Lage geändert wird. Vielmehr verbleibt dieses horizontale Gelenk stets in seiner vorgegebenen, tief angeordneten Position. Vorteilhaft kann der hintere Pflugrahmen am vorderen Pflugrahmen über ein Federelement abgestützt sein, das die horizontale Querachse übergreift.

In einer bevorzugten Weiterbildung der Erfindung ist vorgesehen, daß der vordere und der hintere Pflugrahmen über eine längenveränderbare, eine Verkippung ermöglichende, drehfeste Vorrichtung miteinander verbunden sind. Die Vorrichtung kann beispielsweise zwei miteinander gekoppelte Kreuzgelenke umfassen, welche in geeigneter Weise miteinander verbunden sind, um eine Kippbewegung um das horizontale Gelenk zu ermöglichen. Die Kreuzgelenke können beispielsweise mittels einer Teleskopstange verbunden sein, so wie dies bei Gelenkwellen von Bodenbearbeitungsmaschinen üblich ist. Es ist auch möglich, die beiden Kreuzgelenke über miteinander gekoppelte Laschen zu verbinden. Letztere Ausgestaltungsform erweist sich hinsichtlich der Schmierung und der Baulänge als besonders vorteilhaft.

Der hintere Endbereich des hinteren Pflugrahmens ist bevorzugterweise mit einer Tiefenführungseinrichtung versehen, beispielsweise einem hinteren Stützrad, einer Schleifsohle oder einer labilen Anhängung.

Um eine ausreichende Belastung des hinteren Pflugrahmens zu gewährleisten, erweist es sich als vorteilhaft, wenn das Hebelelement, an welchem der hintere Pflugrahmen um die horizontale Achse schwenkbar an dem vorderen Pflugrahmen gelagert ist, an einem tiefliegenden Bereich der Abstützvorrichtung angebracht ist. Letztere kann beispielsweise einen Karren umfassen, welcher mit zwei Rädern ausgestützt ist. Hierbei stört die tiefliegende Anordnung des Drehpunktes des Hebelelementes nicht die freie Verfahrbarkeit des Drehpfluges, da die Abstützvorrichtung eine ausreichende Bodenfreiheit gewährleistet. Die Höhe der horizontalen Achse kann dann bei gleicher Wirkung höher liegend angeordnet werden, wenn das hintere Pflugrahmenteil federbelastet ist.

Im folgenden wird die Erfindung an Hand eines Ausführungsbeispieles in Verbindung mit der Zeichnung beschrieben. Dabei zeigt:
- Fig. 1: eine schematische Seitenansicht eines Teilbereiches des erfindungsgemäßen Drehpfluges,
- Fig. 2: eine Draufsicht auf den in Fig. 1 gezeigten Teilbereich des Drehpfluges,
- Fig. 3: eine Detail-Seitenansicht des horizontalen Gelenkbereiches in einem ersten Ausführungsbeispiel,
- Fig. 4: eine schematische Seitenansicht der an dem Ausführungsbeispiel der Fig. 3 verwendbaren Abstützvorrichtung, und
- Fig. 5: eine Draufsicht des in Fig. 3 gezeigten Ausführungsbeispieles des horizontalen Gelenkbereiches.

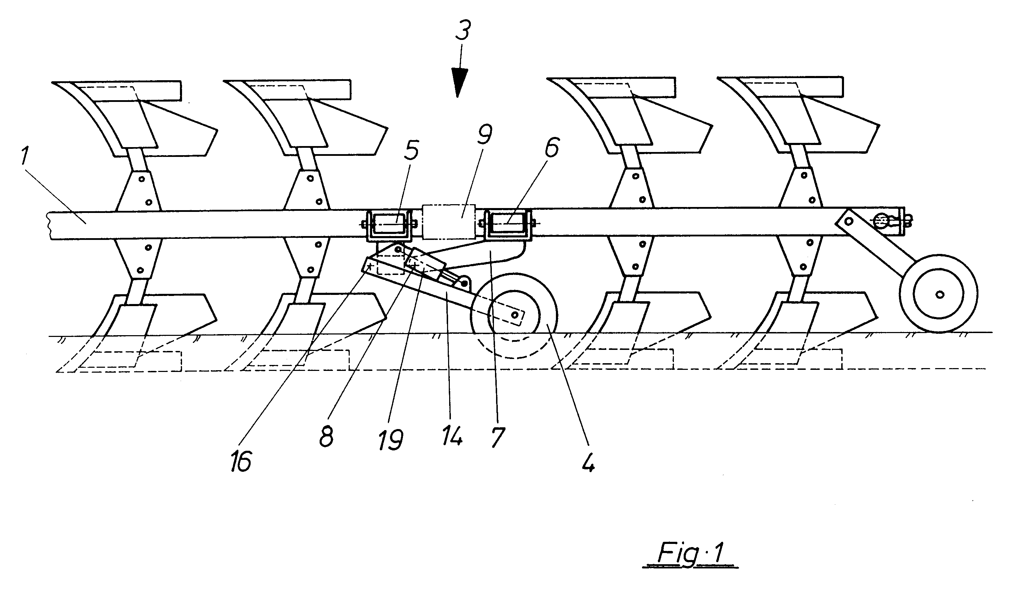

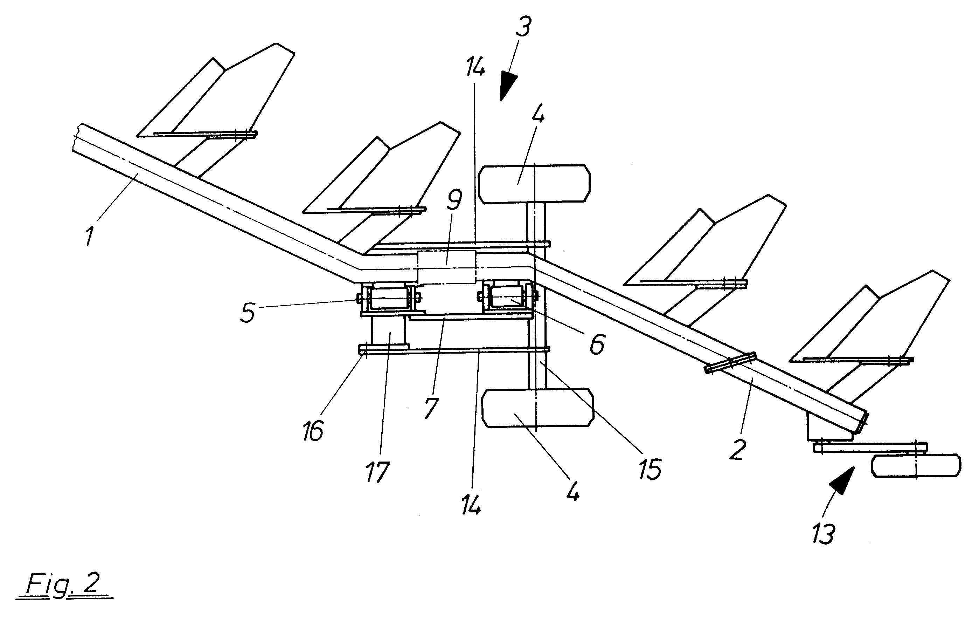

Die Fig. 1 und 2 zeigen in der Seitenansicht bzw. in der Draufsicht ein erstes Ausführungsbeispiel des erfindungsgemäßen Drehpfluges, wobei von einem vorderen Pflugrahmen 1 lediglich der hintere Bereich gezeigt ist, an welchem mittels eines horizontalen Gelenkes 3 ein hinterer Pflugrahmen 2 gelagert ist. Die Pflugrahmen tragen jeweils Pflugscharen, so wie dies aus dem Stand der Technik bekannt ist. An dem Übergangsbereich zwischen dem vorderen und dem hinteren Pflugrahmen ist eine Abstützvorrichtung vorgesehen, welche im einzelnen noch beschrieben werden wird. Die Abstützvorrichtung umfaßt zwei Räder 4, welche an einer gemeinsamen Achse 15 gelagert sind. Die Achse 15 ist mittels zweier zueinander paralleler Träger 14 höhenveränderbar gelagert, wobei die beiden Träger 14 um eine Schwenkachse 16, welche quer und horizontal angeordnet ist, an einem Querträger 17 verschwenkbar gelagert sind.

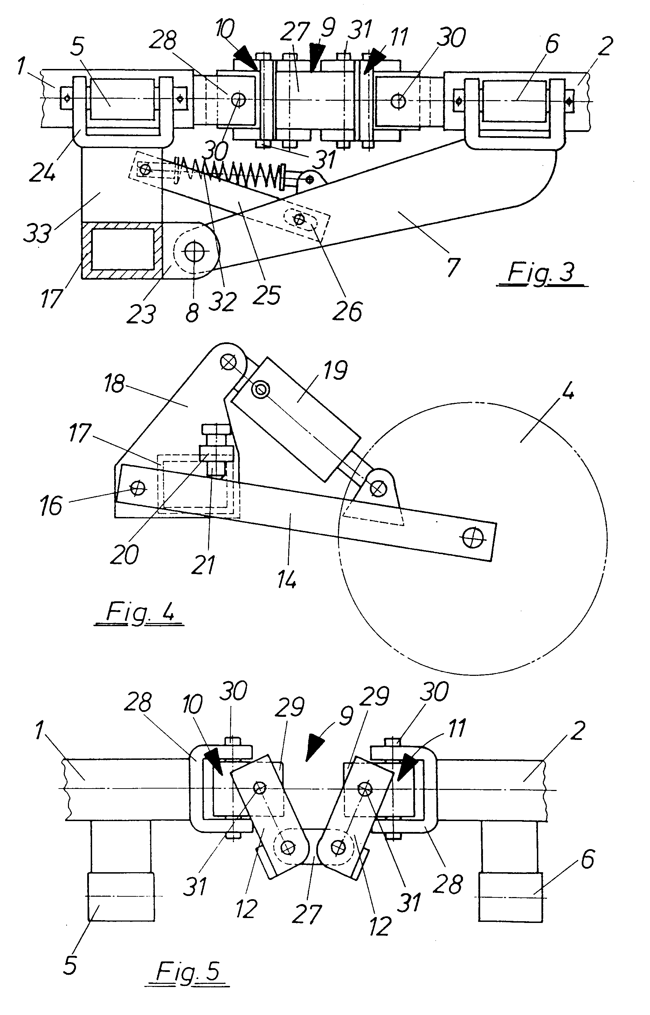

Die Fig. 4 zeigt im einzelnen die Anordnung der Träger 14 an dem Querträger 17. Dabei ist insbesondere ersichtlich, daß an dem Querträger 17 zumindest eine vertikale Platte 18 befestigt ist, welche der eigentlichen Lagerung des Trägers 14 dient. Zwischen einem oberen Bereich der Platte 18 und dem Träger 14 ist ein Aushubzylinder 19 angebracht, welcher den Schwenkwinkel des Trägers 14 und damit die Höhe der Abstützung durch das Rad 4 bestimmt. Weiterhin ist an der Platte 18 eine mit einer Gewindebohrung versehene Konsole 20 befestigt, in welcher eine Gewinde-Spindel 21 aufgenommen ist, welche als Anschlag für den Träger 14 wirkt und zur Tiefeneinstellung dient.

Die Fig. 1 und 2 zeigen weiterhin, daß das hintere Ende des vorderen Pflugrahmens 1 um eine im wesentlichen in Fahrtrichtung angeordnete, horizontale Achse 5 verschwenkbar ist, während das vordere Ende des hinteren Pflugrahmens 2 um eine zweite Achse 6 verschwenkbar ist, welche in der in Fig. 1 gezeigten Stellung mit der ersten Achse 5 fluchtet. Die Achsen 5 und 6 dienen zum Drehen des Pfluges.

Die Lagerung des hinteren Pflugrahmens 2 an dem vorderen Pflugrahmen 1 erfolgt mittels zumindest eines Hebelelementes 7 (siehe Fig. 3), welches fest an einem U-förmigen Joch 22 befestigt ist, welches zur Drehung um die zweite Achse 6 an dem hinteren Pflugrahmen 2 gelagert ist. Der vordere Endbereich des Hebelelementes 7 ist an einer Lasche 23 so gelagert, daß eine Drehung um eine Querachse 8 möglich ist. Die Lasche 23 wiederum ist, wie die Fig. 2 und 3 zeigen, fest mit dem Querträger 17 verbunden. Oberhalb des Querträgers 17 ist ein weiteres Joch 24 befestigt, welches, wie die Fig. 3 zeigt, an dem hinteren Ende des vorderen Pflugrahmens 1 gelagert ist, um eine Drehung um die erste Achse 5 zu ermöglichen.

Zur Begrenzung der Verschwenkung des Hebelelementes 7 dient eine Lasche 25, deren eines Ende mit einem Langloch 26 versehen ist, es kann auch ein Paar derartiger Laschen verwendet werden. An dem mit dem Querträger 17 verbundenen Zwischenstück 33, an dem auch die Lasche 25 angreift, ist eine Druckfeder 32 befestigt, deren anderes Ende an dem Hebelelement angreift. Hierdurch ist eine elastische Abstützung des hinteren Pflugrahmens 2 gegenüber dem vorderen Pflugrahmen 1 gegeben, so daß bei gleicher Wirkung die horizontale Querachse 8 höher gelegt werden kann, so daß die Gefahr von Verstopfungen weiter verringert wird.

Aus den Fig. 1 und 2 ergibt sich, daß der vordere und der hintere Pflugrahmen 1 bzw. 2 um die Achsen 5 und 6 drehbar sind. Es ergibt sich weiterhin, daß durch die Lagerung des Hebelelementes 7 der zweite, hintere Pflugrahmen 2 relativ zu dem ersten Pflugrahmen 1 kippbar ist, um eine Anpassung an Bodenunebenheiten o.ä. zu ermöglichen. Um nun eine gemeinsame Drehung der beiden Pflugrahmen zu ermöglichen, ist eine Vorrichtung 9 vorgesehen, welche die beiden Pflugrahmen 1 und 2 drehfest verbindet. Die erfindungsgemäß vorgesehene Konstruktion schafft somit die Möglichkeit, den hinteren Pflugrahmen 2 an einer tiefliegenden Querachse 8 zu lagern, welche in ihrer Lage unabhängig von der Drehung des Pfluges ist. Gleichzeitig muß der hintere Pflugrahmen 2 keine zusätzlichen Vorrichtungen zur Drehung umfassen.

Die Fig. 1 und 2 zeigen weiterhin, daR am hinteren Ende des hinteren Pflugrahmens 2 eine Tiefenführungseinrichtung 13 vorgesehen ist, welche ein an einem Schwenkhebel gelagertes Rad umfassen kann. Es sind auch Schleifsohlen oder andere Ausgestaltungen möglich.

In der Fig. 3 ist ein erstes Ausführungsbeispiel der erfindungsgemäßen Vorrichtung 9 dargestellt. Diese umfaßt zwei Kreuzgelenke 10, 11, welche drehfest, jedoch längenveränderbar über ein Verbindungsstück 27 miteinander verbunden sind. Wie sich aus der nachfolgenden Beschreibung ergibt, ermöglicht das Verbindungsstück 27 eine Längenänderung hinsichtlich des Abstandes der beiden Kreuzgelenke 10, 11, so daR eine Verschwenkung der Pflugrahmen um die Querachse 8 ermöglicht wird. An Stelle des Verbindungsstückes 27, welches im einzelnen in Fig. 5 erläutert ist, ist auch ein teleskopartiges Verbindungselement, beispielsweise in Form einer Gelenkwelle möglich.

Wie die Fig. 3 und 5 zeigen, ist an dem hinteren Ende des vorderen Pflugrahmens 1 eine Gabel 28 befestigt, das vordere Ende des hinteren Pflugrahmens 2 weist ebenfalls eine derartige Gabel 28 auf. In den beiden Gabeln 28 ist jeweils ein Klotz 29 gelagert, welcher mit zwei um neunzig Grad zueinander versetzten Bohrungen versehen ist, in welchen Achsen 30 und 31 angeordnet sind. Auf diese Weise wird ein in zwei Achsen verschwenkbares Kreuzgelenk gebildet. An den Achsen 31 ist jeweils eine Lasche 12 gelagert, welche an ihrem Endbereich das Verbindungsstück 27 lagert. Somit sind die beiden Kreuzgelenke 10 und 11 drehfest hinsichtlich der Drehung des Pfluges miteinander gekoppelt, während durch die Verschwenkung der Laschen 12 der Abstand der beiden Kreuzgelenke 10 und 11 veränderbar ist.

Die Erfindung ist nicht auf das gezeigte Ausführungsbeispiel beschränkt, vielmehr ergeben sich für den Fachmann im Rahmen der Ansprüche vielfältige Abwandlungs- und Modifikationsmöglichkeiten.

## Patentansprüche

1. Aufsattel- oder Anhänge-Drehpflug mit einem vorderen (1) und einem hinteren (2), durch ein horizontales Gelenk (3) verbundenen Pflugrahmen, mit einer mindestens ein Rad (4) umfassenden Abstützvorrichtung, welche in der hinteren Hälfte des Drehpfluges angeordnet ist, und einer Tiefen-Führungseinrichtung für den hinteren Pflugrahmen (2), wobei der hintere Endbereich des vorderen Pflugrahmens (1) um eine horizontale, im wesentlichen in Fahrtrichtung angeordnete erste Achse (5) schwenkbar an der Abstützvorrichtung gelagert ist, dadurch gekennzeichnet, daß der vordere Endbereich des hinteren Pflugrahmens (2) um eine zweite, zu der ersten Achse (5) im wesentlichen fluchtende Achse (6) schwenkbar an zumindest einem Hebelelement (7) gelagert ist, welches um eine Querachse (8) schwenkbar an der Abstützvorrichtung angeordnet ist, wobei der vordere (1) und der hintere (2) Pflugrahmen miteinander drehbar koppelbar sind.

2. Drehpflug nach Anspruch 1, dadurch gekennzeichnet, daß der vordere (1) und der hintere (2) Pflugrahmen über eine längenveränderbare, eine Verkippung ermöglichende, drehfeste Vorrichtung (9) miteinander verbunden sind.

3. Drehpflug nach Anspruch 2, dadurch gekennzeichnet, daß die Vorrichtung (9) zwei miteinander gekoppelte Kreuzgelenke (10, 11) umfaßt.

4. Drehpflug nach Anspruch 3, dadurch gekennzeichnet, daß die Kreuzgelenke (10, 11) gelenkwellenartig mittels eines Teleskopelementes miteinander gekoppelt sind.

5. Drehpflug nach Anspruch 3, dadurch gekennzeichnet, daß die Kreuzgelenke (10, 11) über gelenkig miteinander gekoppelte Laschen (12) miteinander gekoppelt sind.

6. Drehpflug nach einem der Ansprüche 1 bis 5, dadurch gekennzeichnet, daß der hintere Endbereich des hinteren Pflugrahmens (2) mit einer Tiefenführungseinrichtung (13) versehen ist.

7. Drehpflug nach einem der Ansprüche 1 bis 6, dadurch gekennzeichnet, daß die Querachse (8) von einer elastischen Abstützung (32) übergriffen wird.

8. Drehpflug nach Anspruch 7, dadurch gekennzeichnet, daß die elastische Abstützung als Feder (32) ausgebildet ist.

9. Drehpflug nach einem der Ansprüche 1 bis 8, dadurch gekennzeichnet, daß das an dem hinteren Pflugrahmen (2) befestigte Hebelelement an einem tiefliegenden Bereich der Abstützvorrichtung gelagert ist.

10. Drehpflug nach einem der Ansprüche 1 bis 9, dadurch gekennzeichnet, daß die Abstützvorrichtung einen zwei Räder (4) aufweisenden Karren umfaßt.

## Claims

1. A semi-mounted or trailed reversible plough having a front (1) and a rear (2) plough frame connected by a horizontal joint (3), having a supporting device comprising at least one wheel (4) and arranged in the rear half of the reversible plough, and having a depth guide arrangement for the rear plough frame (2), wherein the rear end region of the front plough frame (1) is mounted on the supporting device so as to be pivotable about a first horizontal axle (5) substantially arranged in the direction of travel, characterised in that the front end region of the rear plough frame (2) is mounted on at least one lever element (7) so as to be pivotable about a second axle (6) substantially in alignment with the first axle (5), the said lever element (7) being arranged on the supporting device so as to be pivotable about a cross-axle (8), the front (1) and the rear (2) plough frames being pivotably interconnectable.

2. A reversible plough according to claim 1, characterised in that the front (1) and the rear (2) plough frames are interconnected by a length-adjustable, rotationally fixed device (9) enabling tilting to take place.

3. A reversible plough according to claim 2, characterised in that the device (9) comprises two interconnected universal joints (10, 11).

4. A reversible plough according to claim 3, characterised in that the universal joints (10, 11) are interconnected in the manner of a universal-joint shaft by means of a telescopic member.

5. A reversible plough according to claim 3, characterised in that the universal joints (10, 11) are interconnected by means of plates (12) interconnected in an articulated manner.

6. A reversible plough according to one of claims 1 to 6, characterised in that the rear end region of the rear plough frame (2) is provided with a depth guide arrangement (13).

7. A reversible plough according to one of claims 1 to 5, characterised in that the cross-axle (8) is overlapped by a resilient support (32).

8. A reversible plough according to claim 7, characterised in that the resilient support is formed as a spring (32).

9. A reversible plough according to one of claims 1 to 8, characterised in that the lever element fixed to the rear plough frame (2) is mounted on a low-lying region of the supporting device.

10. A reversible plough according to one of claims 1 to 9, characterised in that the supporting device comprises a forecarriage having two wheels (4).

## Revendications

1. Charrue réversible semi-portée ou traînée comportant un châssis avant (1) et un châssis arrière (2) reliés par une articulation horizontale (3), ainsi qu'un dispositif d'appui comprenant au moins une roue (4) et disposé dans la moitié arrière de la charrue réversible, et un dispositif de guidage en profondeur pour le châssis arrière (2),
la partie d'extrémité arrière du châssis avant (1) reposant sur le dispositif d'appui avec possibilité de pivoter autour d'un premier axe (5) disposé pratiquement dans le sens de la marche,
caractérisé en ce que la partie d'extrémité avant du châssis arrière (2) repose sur au moins un élément de levage (7) avec possibilité de pivoter autour d'un second axe (6) pratiquement aligné avec le premier axe (5), cet élément (7) étant monté sur le dispositif d'appui avec possibilité de pivoter autour autour d'un axe transversal (8), les châssis avant (1) et arrière (2) pouvant être accouplés avec possibilité de tourner l'un par rapport à l'autre.

2. Charrue réversible selon la revendication 1, caractérisée en ce que les châssis avant (1) et arrière (2) de la charrue sont reliés l'un à l'autre par un dispositif (9) empêchant la rotation, réglable en longueur et permettant un basculement.

3. Charrue réversible selon la revendication 2, caractérisée en ce que le dispositif (9) comporte deux joints universels (10, 11) acccouplés l'un à l'autre.

4. Charrue réversible selon la revendication 3, caractérisée en ce que les joints universels (10, 11) sont acccouplés l'un à l'autre à la manière d'un arbre à transmission articulé au moyen d'un élément télescopique.

5. Charrue réversible selon la revendication 4, caractérisée en ce que les joints universels (10, 11) sont acccouplés l'un à l'autre par des attaches (12) accouplées l'une à l'autre de manière articulée.

6. Charrue réversible selon les revendications 1 à 5, caractérisée en ce que la partie d'extrémité arrière du châssis arrière (2) de la charrue est équipée d'un dispositif de guidage en profondeur (13).

7. Charrue réversible selon les revendications 1 à 5, caractérisée en ce que l'axe transversal (8) est doublé par un appui élastique (32).

8. Charrue réversible selon la revendications 7, caractérisée en ce que l'appui élastique est constitué par un ressort(32).

9. Charrue réversible selon les revendications 1 à 8, caractérisée en ce que l'élément de levage fixé au châssis arrière (2) de la charrue est placé dans une zone basse du dispositif d'appui.

10. Charrue réversible selon les revendications 1 à 9, caractérisée en ce que le dispositif d'appui comporte un chariot muni de deux roues.
